(19) Europäisches Patentamt
European Patent Office
Office européen des brevets

(11) EP 2 889 315 A1

(12) EUROPEAN PATENT APPLICATION
published in accordance with Art. 153(4) EPC

(43) Date of publication:
**01.07.2015 Bulletin 2015/27**

(21) Application number: **13831227.7**

(22) Date of filing: **14.08.2013**

(51) Int Cl.:
***C08F 214/18*** *(2006.01)* ***C08F 293/00*** *(2006.01)*
***C08J 3/24*** *(2006.01)*

(86) International application number:
**PCT/JP2013/071921**

(87) International publication number:
**WO 2014/030586 (27.02.2014 Gazette 2014/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.08.2012 JP 2012182281**

(71) Applicant: **Asahi Glass Company, Limited**
**Tokyo 100-8405 (JP)**

(72) Inventors:
- **SUGIYAMA, Norihide**
  **Tokyo 100-8405 (JP)**
- **YAMAMOTO, Hiromasa**
  **Tokyo 100-8405 (JP)**
- **KUNIMOTO, Akinobu**
  **Tokyo 100-8405 (JP)**
- **OHKURA, Masahiro**
  **Tokyo 100-8405 (JP)**

(74) Representative: **Müller-Boré & Partner Patentanwälte PartG mbB**
**Friedenheimer Brücke 21**
**80639 München (DE)**

# (54) CURABLE FLUORINE-CONTAINING POLYMER, METHOD FOR PRODUCING SAME, AND FLUORINE-CONTAINING POLYMER CURED PRODUCT

(57) To provide a curable fluorinated polymer which is excellent in curability, and a fluorinated polymer cured product which is excellent in heat resistance and chemical resistance and which exhibits excellent properties as an elastomer.

A curable fluorinated polymer having constituent units (A) based on fluoromonoenes (a) and constituent units (B) based on a non-cyclopolymerizable fluorodiene (b), in which the content of polymerizable double bonds is from 0.01 to 0.5 mmol/g, and of which the intrinsic viscosity is from 0.1 to 1 dL/g, and a fluorinated polymer cured product obtained by curing the curable fluorinated polymer in the presence of an organic peroxide.

EP 2 889 315 A1

## Description

### TECHNICAL FIELD

The present invention relates to a curable fluorinated polymer, a process for its production, and a fluorinated polymer cured product obtained by curing the curable fluorinated polymer.

### BACKGROUND ART

A fluoroelastomer having crosslinked molecular chains having constituent units based on fluoroethylene, is excellent in heat resistance, chemical resistance, etc. and therefore is used as various sealing materials for e.g. O-rings, packings, etc. Particularly, a perfluoroelastomer having crosslinked molecular chains having constituent units based on tetrafluoroethylene (hereinafter referred to as TFE) and constituent units based on a perfluoroalkyl vinyl ether (hereinafter referred to as PAVE), is durable even against severe conditions and therefore is used as various sealing materials for e.g. semi-conductor production apparatus, chemical plant apparatus, etc.

The following methods have been proposed as methods for crosslinking uncrosslinked perfluoroelastomers.

(1) A method wherein pentafluorophenyl groups as crosslinkable moieties are introduced to molecular chains, and crosslinking is carried out between a pentafluorophenyl group of a molecular chain and a pentafluorophenyl group of another molecular chain, by a bisphenol compound in the presence of a crown ether (see Patent Document 1).

(2) A method wherein nitrile groups as crosslinkable moieties are introduced to molecular chains, and a triazine ring is permitted to be formed by a nitrile group of a molecular chain and a nitrile group of another molecular chain in the presence of an organic tin compound (see Patent Document 2).

(3) A method wherein in the above method (2), a bisaminophenyl compound is added as a crosslinking agent to accelerate the formation of the triazine ring (see Patent Document 3).

(4) A method wherein bromine atoms as crosslinkable moieties are introduced to molecular chains by copolymerizing a bromine-containing fluoroolefin, and crosslinking is carried out between a bromine atom of a molecular chain and a bromine atom of another molecular chain, by triallyl isocyanurate as a crosslinking assistant in the presence of a peroxide (see Patent Document 4).

(5) A method wherein iodine atoms as crosslinkable moieties are introduced to molecular chain terminals by using a diiodo compound as a chain transfer agent, and crosslinking is carried out between an iodine atom of a molecular chain terminal and an iodine atom of another molecular chain terminal, by triallyl isocyanurate as a crosslinking assistant in the presence of a peroxide (see Patent Documents 5 and 6).

However, in the method (1), the crosslinking reaction rate is slow, and addition of a large amount of the crown ether compound is required, whereby coloration and foaming tend to take place, and therefore, forming is required to be conducted at a temperature of at most 190°C and crosslinking tends to be inadequate.

The perfluoroelastomers having triazine rings at the crosslinking points, obtainable by the methods (2) and (3), are insufficient in chemical resistance (amine resistance).

The perfluoroelastomers having isocyanurate rings at the crosslinking points, obtainable by the methods (4) and (5) are poor in heat resistance as compared with perfluoroelastomers having triazine rings at the crosslinking points.

Therefore, it has been desired to develop a perfluoroelastomer having heat resistance further improved, while maintaining the chemical resistance as a perfluoroelastomer.

Further, as a sealant for a light-emitting device, the following curable composition has been proposed.

(6) A curable composition containing a fluoropolymer having constituent units based on a fluoromonoene and constituent units based on a non-cyclopolymerizable fluorodiene and having a mass average molecular weight of from 3,000 to 20,000 (see Patent Document 7).

The curable composition (6) has polymerizable double bonds in side chains as crosslinkable moieties and therefore can be cured by heating or ultraviolet irradiation. The crosslinking points in the cured product do not have a structure of triazine rings or isocyanurate rings, and therefore, the cured product has good heat resistance and chemical resistance.

However, the curable composition (6) has the following problems.

(I) The number of side chains having polymerizable double bonds as crosslinkable moieties is large, and in the cured product, the molecular weight between crosslinking points is small, whereby the cured product does not exhibit properties as an elastomer.

(II) In its application as a sealant for a light-emitting device, the fluoropolymer before curing is required to have fluidity, and therefore, the mass average molecular weight of the fluoropolymer before curing is low (the intrinsic viscosity is at most about 0.05 dL/g). Therefore, in the cured product, a low molecular weight fluoropolymer remains, and there has been a case where the heat resistance or chemical resistance of the cured product is inadequate.

PRIOR ART DOCUMENTS

PATENT DOCUMENTS

Patent Document 1: US Patent No. 3,580,889
Patent Document 2: US Patent No. 4,394,489
Patent Document 3: US Patent No. 4,525,539
Patent Document 4: US Patent No. 4,035,565
Patent Document 5: US Patent No. 4,243,770
Patent Document 6: WO90/014367
Patent Document 7: WO2009/096342

DISCLOSURE OF INVENTION

TECHNICAL PROBLEM

It is an object of the present invention to provide a curable fluorinated polymer which is excellent in curability and a fluorinated polymer cured product which is excellent in heat resistance and chemical resistance and which exhibits excellent properties as an elastomer.

SOLUTION TO PROBLEM

The curable fluorinated polymer of the present invention is one having constituent units (A) based on fluoromonoenes (a) and constituent units (B) based on a non-cyclopolymerizable fluorodiene (b), in which the content of polymerizable double bonds is from 0.01 to 0.5 mmol/g, and of which the intrinsic viscosity is from 0.1 to 1 dL/g.

The fluoromonoenes (a) are preferably at least two types selected from the group consisting of TFE, hexafluoropropylene, vinylidene fluoride and $CF_2$=CFO-$R^{f1}$ (wherein $R^{f1}$ is a $C_{1-10}$ fluoroalkyl group, or a $C_{2-10}$ fluoroalkyl group having at least one etheric oxygen atom between carbon atoms).

The fluoromonoenes (a) are more preferably TFE and said $CF_2$=CFO-$R^{f1}$.

The curable fluorinated polymer of the present invention may further have constituent units (C) based on at least one monomer (c) selected from the group consisting of propylene, ethylene and isobutylene.

The content of the constituent units (A) is preferably from 90 to 99.9 mol% to the total number of moles of the constituent units (A) and the constituent units (B).

Further, the content of the constituent units (B) is preferably from 0.1 to 10 mol% to the total number of moles of the constituent units (A) and the constituent units (B).

When the constituent units (C) are contained, the content of the constituent units (C) is preferably from 0.1 to 100 mol% to the total number of moles of the constituent units (A) and the constituent units (B).

In the curable fluorinated polymer of the present invention, it is preferred that the constituent units (B) having polymerizable double bonds are present at a terminal of a molecular chain having the constituent units (A).

It is preferred that from 1.1 to 40 constituent units (B) having polymerizable double bonds are present per one terminal of a molecular chain having the constituent units (A).

The fluorodiene (b) is preferably at least one type selected from the group consisting of the following formulae (b1) to (b5):

$CF_2$=CFO-$Q^{f1}$-OCF=$CF_2$ (b1)

$CH_2$=$CFCF_2O$-$Q^{f2}$-$OCF_2CF$=$CH_2$ (b2)

$CH_2$=$CFCF_2O$-$Q^{f3}$-OCF=$CF_2$ (b3)

CH2=CH-$Q^{f4}$-CH=$CH_2$ (b4)

$CH_2=CH-Q^{f5}-OCF=CF_2$ (b5)

wherein $Q^{f1}$ is a $C_{3-10}$ fluoroalkylene group, or a $C_{3-10}$ fluoroalkylene group having at least one etheric oxygen atom between carbon atoms,
$Q^{f2}$ is a $C_{1-10}$ fluoroalkylene group, or a $C_{2-10}$ fluoroalkylene group having at least one etheric oxygen atom between carbon atoms,
$Q^{f3}$ is a $C_{2-10}$ fluoroalkylene group, or a $C_{2-10}$ fluoroalkylene group having at least one etheric oxygen atom between carbon atoms,
$Q^{f4}$ is a $C_{4-10}$ fluoroalkylene group, or a $C_{4-10}$ fluoroalkylene group having at least one etheric oxygen atom between carbon atoms,
$Q^{f5}$ is a $C_{4-10}$ fluoroalkylene group, or a $C_{3-10}$ fluoroalkylene group having at least one etheric oxygen atom between carbon atoms.

In the curable fluorinated polymer of the present invention, the content of iodine atoms is preferably from 0.1 to 20 $\mu$mol/g.

The process for producing a curable fluorinated polymer of the present invention comprises the following steps ($\alpha$) and ($\beta$):

($\alpha$) Step of subjecting a monomer component containing the fluoromonoenes (a) to radical co-polymerization in the presence of a chain transfer agent having iodine atoms to obtain an iodine-terminal polymer (X),
($\beta$) Step of subjecting the fluorodiene (b) to radical polymerization in the presence of the iodine-terminal polymer (X) to introduce constituent units (B) based on the fluorodiene (b) to terminals of the iodine-terminal polymer (X).

The chain transfer agent having iodine atoms is preferably $IR^{f2}I$ (wherein $R^{f2}$ is a $C_{3-12}$ fluoroalkylene group).

The monomer component preferably contains the fluoromonoenes (a) and the fluorodiene (b).

The fluorinated polymer cured product of the present invention is one obtained by curing a curable fluorinated polymer of the present invention in the presence of an organic peroxide.

The fluorinated polymer cured product of the present invention is preferably one obtained by curing a curable fluorinated polymer of the present invention in the presence of an organic peroxide and an acid acceptor.

The fluorinated polymer cured product of the present invention is preferably a fluoroelastomer.

## ADVANTAGEOUS EFFECTS OF INVENTION

The curable fluorinated polymer of the present invention is excellent in curability.

According to the process for producing a curable fluorinated polymer of the present invention, it is possible to simply produce the curable fluorinated polymer of the present invention.

The fluorinated copolymer cured product of the present invention is excellent in heat resistance and chemical resistance and exhibits excellent properties as an elastomer.

## DESCRIPTION OF EMBODIMENTS

In this specification, a fluorodiene (b) represented by the formula (b1) will be referred to as a fluorodiene (b1), and a fluorodiene (b) represented by another formula will be referred to in the same manner.

In this specification, a fluoromonoene is a compound having at least one fluorine atom and having one polymerizable double bond.

In this specification, a fluorodiene is a compound having at least one fluorine atom and having two polymerizable double bonds.

In this specification, a fluoroalkylene group is a group having at least one hydrogen atom in an alkylene group substituted by a fluorine atom.

In this specification, a fluoroalkylene group having at least one etheric oxygen atom between carbon atoms is a group having at least one hydrogen atom in an alkylene group having at least one etheric oxygen atom between carbon atoms, substituted by a fluorine atom. It may also be referred to as an oxafluoroalkylene group.

In this specification, a perfluoroalkylene group is a group having all hydrogen atoms in an alkylene group substituted by fluorine atoms.

In this specification, a perfluoroalkylene group having at least one etheric oxygen atom between carbon atoms is a group having all hydrogen atoms in an alkylene group having at least one etheric oxygen atom between carbon atoms, substituted by fluorine atoms. Such a group may also be referred to as an oxaperfluoroalkylene group.

In this specification, the properties as an elastomer are meant for flexibility, rubber elasticity, high elongation

at ordinary temperature, etc.

In this specification, a fluoroelastomer and a perfluoroelastomer are meant for ones in a crosslinked state. Further, a perfluoroelastomer in an uncrosslinked state may sometimes be referred to as an uncrosslinked perfluoroelastomer.

In this specification, an iodine-terminal polymer (X) is meant for a polymer having iodine atoms at terminals of its polymer chain.

<Curable fluorinated polymer>

The curable fluorinated polymer of the present invention has constituent units (A) based on fluoromonoenes (a) and constituent units (B) based on a non-cyclopolymerizable fluorodiene (b). As the case requires, it may have constituent units (C) based on the after-described monomer (c) and other constituent units (D), etc. excluding the constituent units (A) to (C).

(Constituent units (A))

Constituent units (A) are constituent units based on fluoromonoenes (a).

Constituent units (A) are preferably the main component in the constituent units constituting the molecular chain of a curable fluorinated polymer. When the curable fluorinated polymer has a molecular chain composed mainly of constituent units (A), it sufficiently exhibits excellent properties as an elastomer.

The fluoromonoenes (a) may, for example, be TFE, hexafluoropropylene, vinylidene fluoride, PAVE, chlorotrifluoroethylene (hereinafter referred to as CTFE), 1,2-difluoroethylene, monofluoroethylene, and 2,2,2,3-tetrafluoro-1-propene. The fluoromonoenes (a) may be used in combination of at least two types of them.

From the viewpoint of polymerizability, the fluoromonoenes (a) are preferably at least two types selected from the group consisting of TFE, hexafluoropropylene, vinylidene fluoride and $CF_2$=CFO-$R^{f1}$ (wherein $R^{f1}$ is a $C_{1-10}$ fluoroalkyl group, or a $C_{2-10}$ fluoroalkyl group having at least one etheric oxygen atom between carbon atoms). From the viewpoint of excellent heat resistance and chemical resistance, a combination of TFE and $CF_2$=CFO-$R^{f1}$ is more preferred. From the viewpoint of heat resistance and chemical resistance, the molar ratio (TFE/$CF_2$=CFO-$R^{f1}$) of constituent units based on TFE to constituent units based on $CF_2$=CFO-$R^{f1}$ is preferably from 30/70 to 70/30, more preferably from 50/50 to 70/30.

As $CF_2$=CFO-$R^{f1}$, the following ones are preferred, and $CF_2$=CFO-$CF_3$ is more preferred, from the viewpoint of availability of the monomer.

$CF_2$=CFO-$CF_3$,

$CF_2$=CFO-$CF_2CF_3$,

$CF_2$=CFO-$CF_2CF_2CF_3$,

$CF_2$=CFO-$CF_2CF(CF_3)OCF_2CF_2CF_3$,

$CF_2$=CFO-$CF_2CF_2OCF_2CF_3$.

The content of the constituent units (A) is preferably from 90 to 99.9 mol%, more preferably from 95 to 99.9 mol%, to the total number of moles of the constituent units (A) and the constituent units (B) from the viewpoint of the heat resistance and chemical resistance of a finally obtainable cured product and from the viewpoint of the properties, as an elastomer, of the finally obtainable cured product.

(Constituent units (B))

Constituent units (B) are constituent units based on fluorodiene (b).

Constituent units (B) are preferably present as constituent units having polymerizable double bonds at terminals of a molecular chain having the constituent units (A). By the presence of polymerizable double bonds at terminals of the molecular chain, the molecular weight between crosslinking points in the cured product tends to be large, whereby the cured product can more sufficiently exhibit the properties as an elastomer.

The number of constituent units (B) having polymerizable double bonds may be only one, or two or more as linked to one another, per one terminal.

Per one terminal, a plurality of constituent units (B) having polymerizable double bonds are preferably present; from 1.1 to 40 such units on average are more preferably present; and from 1.1 to 20 such units on average are further

preferably present, so that good curability will be imparted and a cured product will exhibit sufficient heat resistance and chemical resistance.

The curable fluorinated polymer having polymerizable double bonds at terminals of its molecular chain can be produced by a production process comprising the after-described steps ($\alpha$) and ($\beta$).

While the constituent units (B) are present as constituent units having polymerizable double bonds at terminals of the molecular chain having the constituent units (A), it is also more preferred that separately from such constituent units, they are present as constituent units to introduce branch points in the molecular chain having the constituent units (A). If one or more branch points are preliminarily present in a curable fluorinated polymer before curing, terminal polymerizable double bonds are at least three in one molecule, whereby it is possible to increase the efficiency of the curing reaction of the curable fluorinated polymer and to further improve the heat resistance and chemical resistance of the cured product.

Such a constituent unit (B) to constitute a branch point may be present at one location or at two or more locations in the curable fluorinated polymer.

A curable fluorinated polymer preliminarily having branch points may be produced by incorporating a monomer capable of forming a branch point, such as a non-cyclopolymerizable fluorodiene (b), in the monomer component in the after-described step ($\alpha$).

The fluorodiene (b) may, for example, be a perfluorodiene constituted by carbon atoms and fluorine atoms; a perfluorodiene constituted by carbon atoms, fluorine atoms and oxygen atom(s); or a fluorodiene having at least one fluorine atom in a perfluorodiene substituted by a hydrogen atom.

From the viewpoint of heat resistance and chemical resistance of the cured product, the fluorodiene (b) is preferably a perfluorodiene constituted by carbon atoms, fluorine atoms and oxygen atom(s).

The number of atoms (total of carbon atoms and oxygen atoms) in a linking chain to link the two polymerizable double bonds in the fluorodiene (b) is preferably from 5 to 10, more preferably from 5 to 8. When the number of atoms in the linking chain is at least the lower limit value, the two polymerizable double bonds in the molecule are prevented from reaction to each other to cause intramolecular cyclization, and polymerizable double bonds tend to easily remain at terminals of the molecular chain of the curable fluorinated polymer. Further, they tend to form branch points in the molecular chain of the curable fluorinated polymer. When the number of atoms in the linking chain is at most the upper limit value, it becomes easy to introduce a plurality of polymerizable double bonds at terminals of the molecular chain of the curable fluorinated polymer, and the efficiency of the curing reaction of the curable fluorinated polymer will be increased. Further, when the number of atoms in the linking chain is at most the upper limit value, the fluorodiene (b) is easy to synthesize and purify to have a high purity.

As the fluorodiene (b), the following fluorodienes (b1) to (b5) are preferred from the viewpoint of the copolymerizability with the fluoromonoenes (a).

$CF_2=CFO-Q^{f1}-OCF=CF_2$ (b1)

$CH_2=CFCF_2O-Q^{f2}-OCF_2CF=CH_2$ (b2)

$CH_2=CFCF_2O-Q^{f3}-OCF=CF_2$ (b3)

$CH_2=CH-Q^{f4}-CH=CH_2$ (b4)

$CH_2=CH-Q^{f5}-OCF=CF_2$ (b5)

$Q^{f1}$ is a $C_{3-10}$ fluoroalkylene group, or a $C_{3-10}$ fluoroalkylene group having at least one etheric oxygen atom between carbon atoms. The number of atoms (total of carbon atoms and oxygen atoms) in $Q^{f1}$ is preferably from 3 to 8, more preferably from 3 to 6.

$Q^{f2}$ is a $C_{1-10}$ fluoroalkylene group, or a $C_{2-10}$ fluoroalkylene group having at least one etheric oxygen atom between carbon atoms. The number of atoms (total of carbon atoms and oxygen atoms) in $Q^{f2}$ is preferably from 1 to 6, more preferably from 1 to 4.

$Q^{f3}$ is a $C_{2-10}$ fluoroalkylene group, or a $C_{2-10}$ fluoroalkylene group having at least one etheric oxygen atom between carbon atoms. The number of atoms (total of carbon atoms and oxygen atoms) in $Q^{f3}$ is preferably from 2 to 7, more preferably from 2 to 5.

$Q^{f4}$ is a $C_{4-10}$ fluoroalkylene group, or a $C_{4-10}$ fluoroalkylene group having at least one etheric oxygen atom between carbon atoms. The number of atoms (total of carbon atoms and oxygen atoms) in $Q^{f4}$ is preferably from 4 to 10, more preferably from 4 to 6.

$Q^{f5}$ is a $C_{4-10}$ fluoroalkylene group, or a $C_{3-10}$ fluoroalkylene group having at least one etheric oxygen atom between carbon atoms. The number of atoms (total of carbon atoms and oxygen atoms) in $Q^{f5}$ is preferably from 4 to

10, more preferably from 4 to 6.

The fluoroalkylene groups for $Q^{f1}$, $Q^{f2}$, $Q^{f3}$, $Q^{f4}$ and $Q^{f5}$ may have a branched structure.

As the fluorodiene (b1), fluorodienes (b11) and (b12) are preferred, since the availability of the monomers is high, and the double bonds are apart from each other so that cyclopolymerization can be avoided.

$CF_2=CFO-Q^{f11}-OCF=CF_2$ (b11)

$CF_2=CFOCH_2-Q^{f12}-CH_2OCF=CF_2$ (b12)

$Q^{f11}$ is a $C_{3-8}$ perfluoroalkylene group, or a $C_{3-8}$ perfluoroalkylene group having at least one etheric oxygen atom between carbon atoms.

$Q^{f12}$ is a $C_{1-6}$ perfluoroalkylene group, or a $C_{2-6}$ perfluoroalkylene group having at least one etheric oxygen atom between carbon atoms.

As the fluorodiene (b11), the following ones may be mentioned.

$CF_2=CFO(CF_2)_4OCF=CF_2$,

$CF_2=CFO(CF_2)_5OCF=CF_2$,

$CF_2=CFO(CF_2)_6OCF=CF_2$,

$CF_2=CFO(CF_2)_4OCF(CF_3)CF_2OCF=CF_2$, etc.

As the fluorodiene (b2), fluorodiene (b21) is preferred, since the availability of the monomer is high, and the double bonds are apart from each other so that cyclopolymerization can be avoided.

$CH_2=CFCF_2O-Q^{f21}-OCF_2CF=CH_2$ (b21)

$Q^{f21}$ is a $C_{1-8}$ perfluoroalkylene group, or a $C_{2-8}$ perfluoroalkylene group having at least one etheric oxygen atom between carbon atoms.

As the fluorodiene (b21), the following ones may be mentioned.

$CH_2=CFCF_2O(CF_2)_2OCF_2CF=CH_2$,

$CH_2=CFCF_2O(CF_2)_3OCF_2CF=CH_2$,

$CH_2=CFCF_2O(CF_2)_4OCF_2CF=CH_2$,

$CH_2=CFCF_2O(CF_2)_2OCF(CF_3)CF_2OCF_2CF=CH_2$.

As the fluorodiene (b3), fluorodiene (b31) is preferred, since the availability of the monomer is high, and the double bonds are apart from each other so that cyclopolymerization can be avoided.

$CH_2=CFCF_2O-Q^{f31}-OCF=CF_2$ (b31)

$Q^{f31}$ is a $C_{1-6}$ perfluoroalkylene group, or a $C_{2-6}$ perfluoroalkylene group having at least one etheric oxygen atom between carbon atoms.

As the fluorodiene (b31), the following ones may be mentioned.

$CH_2=CFCF_2OCF(CF_3)CF_2OCF=CF_2$,

$CH_2=CFCF_2OCF(CF_3)CF_2OCF(CF_3)CF_2OCF=CF_2$, etc.

As the fluorodiene (b4), fluorodienes (b41) and (b42) are preferred, since the availability of the monomers is high, and the double bonds are apart from each other so that cyclopolymerization can be avoided.

$CH_2=CH-Q^{f41}-CH=CH_2$ (b41)

$CH_2=CHCH_2-Q^{f42}-CH_2CH=CH_2$ (b42)

$Q^{f41}$ is a $C_{4-6}$ perfluoroalkylene group, or a $C_{4-6}$ perfluoroalkylene group having at least one etheric oxygen atom between carbon atoms.
$Q^{f42}$ is a $C_{2-6}$ perfluoroalkylene group, or a $C_{2-6}$ perfluoroalkylene group having at least one etheric oxygen atom between carbon atoms.
As the fluorodiene (b41), the following ones may be mentioned.

$CH_2=CH(CF_2)_4CH=CH_2$,

$CH_2=CH(CF_2)_6CH=CH_2$,

$CH_2=CHCF(CF_3)(CF_2)_2CF(CF_3)CH=CH_2$.

As the fluorodiene (b42), the following ones may be mentioned.

$CH_2=CHCH_2(CF_2)_2CH_2CH=CH_2$,

$CH_2=CHCH_2(CF_2)_4CH_2CH=CH_2$,

$CH_2=CHCH_2(CF_2)_6CH_2CH=CH_2$, etc.

As the fluorodiene (b5), fluorodienes (b51) and (b52) are preferred, since the availability of the monomers is high, and the double bonds are apart from each other so that cyclopolymerization can be avoided.

$CH_2=CH-Q^{f51}-OCF=CF_2$ (b51)

$CH_2=CHCH2-Q^{f52}-OCF=CF_2$ (b52)

$Q^{f51}$ is a $C_{4-6}$ perfluoroalkylene group, or a $C_{4-6}$ perfluoroalkylene group having at least one etheric oxygen atom between carbon atoms.
$Q^{f52}$ is a $C_{3-6}$ perfluoroalkylene group, or a $C_{3-6}$ perfluoroalkylene group having at least one etheric oxygen atom between carbon atoms.
As the fluorodiene (b51), the following ones may be mentioned.

$CH_2=CH(CF_2)_4OCF_2=CF_2$,

$CH_2=CH(CF_2)_6OCF_2=CF_2$,

$CH_2=CHCF(CF_3)(CF_2)_3OCF=CF_2$, etc.

As the fluorodiene (b), the fluorodiene (b1) is more preferred, and the fluorodiene (b11) is further preferred, since it has a proper radical addition reactivity whereby polymerizable double bonds tend to readily remain at terminals at the time of synthesizing the curable fluorinated polymer, and it is possible to obtain a cured product excellent in heat resistance.
One type of the fluorodiene (b) may be used alone, or two or more types thereof may be used in combination.
The content of the constituent units (B) is preferably from 0.1 to 10 mol%, more preferably from 0.5 to 5 mol%, to the total number of moles of the constituent units (A) and the constituent units (B), from the viewpoint of the heat resistance and chemical resistance of a finally obtainable cured product and from the viewpoint of the properties, as an elastomer, of the finally obtainable cured product.

(Constituent units (C))

Constituent units (C) are constituent units based on monomer (c).
The monomer (c) is at least one member selected from the group consisting of propylene, ethylene and isobutylene.
The constituent units (C) are preferably one component of constituent units to constitute a molecular chain of the curable fluorinated polymer. When the curable fluorinated polymer has a molecular chain having the constituent

units (A) and the constituent units (C), improvement in transparency, improvement in molding processability and weight reduction can be expected.

The content of the constituent units (C), when contained, is preferably from 0.1 to 100 mol%, more preferably from 0.1 to 50 mol%, to the total number of moles of the constituent units (A) and the constituent units (B), from the viewpoint of the heat resistance and chemical resistance of a finally obtainable cured product and from the viewpoint of the properties, as an elastomer, of the finally obtainable cured product.

(Constituent units (D))

Constituent units (D) are constituent units based on other monomer (d) excluding the fluoromonoenes (a), the fluorodiene (b) and the monomer (c).

As the monomer (d), a monomer containing bromine or iodine is preferred, since crosslinkable moieties will be thereby increased, and it becomes possible to increase the efficiency of the curing reaction of the curable fluorinated polymer.

As the monomer containing bromine or iodine, the following ones may be mentioned.

$CF_2$=CFBr,

$CH_2$=CHC$F_2$C$F_2$Br,

$CF_2$=CFOC$F_2$C$F_2$I,

$CF_2$=CFOC$F_2$C$F_2$Br,

$CF_2$=CFOC$F_2$C$F_2$C$H_2$I,

$CF_2$=CFOC$F_2$C$F_2$C$H_2$Br,

$CF_2$=CFOC$F_2$CF($CF_3$)OC$F_2$C$F_2$C$H_2$I,

$CF_2$=CFOC$F_2$CF($CF_3$)OC$F_2$C$F_2$C$H_2$Br.

The content of the constituent units (D), when contained, is preferably from 0.01 to 5 mol%, more preferably from 0.01 to 3 mol%, to the total number of moles of the constituent units (A) and the constituent units (B), from the viewpoint of the heat resistance and chemical resistance of a finally obtainable cured product and from the viewpoint of the properties, as an elastomer, of the finally obtainable cured product.

When the monomer containing bromine or iodine is used as the monomer (d) to constitute the constituent units (D), not only crosslinkable moieties can be introduced into the curable fluorinated polymer, but also bromine atoms introduced into side chains or iodine atom terminals will serve as starting points for further polymerization. Thus, the constituent units (D) will be branch points. That is, by copolymerization of the monomer containing bromine or iodine, it is possible to increase both of crosslinkable moieties and branch points.

(Polymerizable double bonds)

The curable fluorinated polymer has polymerizable double bonds derived from the fluorodiene (b). For example, in a case where $CF_2$=CFO($CF_2$)$_4$OCF=$CF_2$ (hereinafter referred to as C4DVE) is used as the fluorodiene (b), the obtainable curable fluorinated polymer will have constituent units of the following formulae, etc.

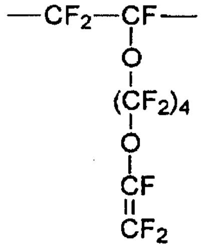

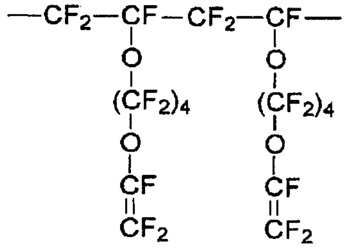

The content of polymerizable double bonds in the curable fluorinated polymer is from 0.01 to 0.5 mmol/g, preferably from 0.03 to 0.3 mmol/g. When the content of polymerizable double bonds is at least the lower limit value, the curing reaction tends to sufficiently occur at the time of curing the curable fluorinated polymer, and it is possible to obtain a cured product having excellent heat resistance and chemical resistance. When the content of polymerizable double bonds is at most the upper limit value, it is possible to avoid a decrease in the heat resistance due to decomposition of unreacted polymerizable double bonds remaining in the cured product. Further, it is possible to avoid a decrease in fluidity due to gelation or molecular weight increase by the curing reaction at the time of producing the curable fluorinated polymer. Further, the number of polymerizable double bonds is small, and the molecular weight between crosslinking points in the cured product is large, whereby the cured product sufficiently exhibits the properties as an elastomer.
The content of polymerizable double bonds can be calculated by the formula (1) given later, from the molar absorption coefficient of the polymerizable double bonds and the area of the absorption peak derived from the polymerizable double bonds in the infrared absorption spectrum of the curable fluorinated polymer.

(Intrinsic viscosity)

The intrinsic viscosity of the curable fluorinated polymer is from 0.1 to 1 dL/g, preferably from 0.2 to 0.8 dL/g. When the intrinsic viscosity is at least the lower limit value, the mass average molecular weight of the curable fluorinated polymer becomes sufficiently high, and it is possible to prevent a low molecular weight curable fluorinate polymer from remaining in a cured product, whereby it is possible to obtain a cured product excellent in heat resistance. When the intrinsic viscosity is at most the upper limit value, the molecular weight is not too high, and there will be no formation of a gel content in the polymer, whereby it is possible to obtain a polymer excellent in molding processability into various shapes.
In a case where the intrinsic viscosity of the curable fluorinated polymer is relatively small, the fluidity tends to be low, whereby the polymer may be used as a sealant for a light-emitting device.
The intrinsic viscosity is measured at 30°C by means of an Ubbelohde viscometer.

(Content of iodine atoms)

The content of iodine atoms in the curable fluorinated polymer of the present invention is preferably from 0.1 to 20 μmol/g, more preferably from 0.2 to 10 μmol/g. When the content of iodine atoms in the curable fluorinated polymer is at least the lower limit value, crosslinkable moieties will increase, and it is thereby possible to increase the efficiency of the curing reaction. When the content of iodine atoms in the curable fluorinated polymer is at most the upper limit value, the amount of iodine atoms not used for curing can be suppressed, whereby the curability will be excellent, and the cured product will be excellent in heat resistance and chemical resistance.

(Advantageous effects)

The curable fluorinated polymer of the present invention as described above, is excellent in curability, since it has constituent units (A) based on fluoromonoenes (a) and constituent units (B) based on a non-cyclopolymerizable fluorodiene (b), wherein the content of polymerizable double bonds is from 0.01 to 0.5 mmol/g, and the intrinsic viscosity is from 0.1 to 1 dL/g.
The obtainable cured product will be excellent in heat resistance and chemical resistance and will exhibit excellent properties as an elastomer.

<Process for producing curable fluorinated polymer>

The process for producing a curable fluorinated polymer of the present invention comprises the following steps (α) and (β):

(α) Step of subjecting a monomer component containing the fluoromonoenes (a) to radical co-polymerization in the presence of a chain transfer agent having iodine atoms to obtain an iodine-terminal polymer (X),
(β) Step of subjecting the fluorodiene (b) to radical polymerization in the presence of the iodine-terminal polymer (X) to introduce constituent units (B) based on the fluorodiene (b) to terminals of the iodine-terminal polymer (X).

(Step (α))

Step (α) is a step of subjecting a monomer component containing the fluoromonoenes (a) to radical co-polymerization in the presence of a chain transfer agent having iodine atoms to obtain an iodine-terminal polymer (X).

In step ($\alpha$), it is preferred that a monomer component containing fluoromonoenes (a) and, as the case requires, a fluorodiene (b), a monomer (c) and other monomer (d), is subjected to radical co-polymerization in the presence of a chain transfer agent having iodine atoms and, as the case requires, a radical polymerization initiator.

The radical co-polymerization method may be a conventional polymerization method, such as an emulsion polymerization method, a solution polymerization method, a suspension polymerization method or a bulk polymerization method. In a case where the iodine terminal polymer (X) is an elastomer, it is necessary to increase the molecular weight of the iodine terminal polymer (X), and therefore, an emulsion polymerization method employing a water-soluble radical polymerization initiator is preferred.

The polymerization temperature is preferably from 0 to 100°C.

The monomer component contains fluoromonoenes (a) and may further contain a fluorodiene (b), a monomer (c) and other monomer (d).

The fluoromonoenes (a) may be ones described above as monomers to constitute the constituent units (A) and are preferably at least two members selected from the group consisting of TFE, hexafluoropropylene, vinylidene fluoride and $CF_2$=CFO-$R^{f1}$, more preferably a combination of TFE and $CF_2$=CFO-$R^{f1}$.

The fluorodiene (b) to be contained in the monomer component, may be one described above as a monomer to constitute the constituent units (B) and is preferably $CF_2=CFO(CF_2)_3OCF=CF_2$ or C4DVE.

By subjecting the monomer component containing the fluorodiene (b) to radical co-polymerization, each of double bonds in the fluorodiene (b) will be polymerized, so that branch points be introduced to the obtainable iodine terminal polymer (X).

By subjecting the monomer component containing, as other monomer (d), a monomer containing bromine or iodine to radical co-polymerization, branch points will be introduced to the obtainable iodine terminal polymer (X).

In a case where constituent units based on the fluorodiene (b) and constituent units based on the monomer containing bromine or iodine, which become branch points, are contained, their total content is preferably from 0.01 to 5 mol%, more preferably from 0.01 to 3 mol%, further preferably from 0.05 to 1 mol%, to the total number of moles of the constituent units (A) and the constituent units (B) constituting the iodine terminal polymer (X).

If a branch point(s) is(are) introduced into the iodine terminal polymer (X), iodine terminals in the iodine terminal polymer (X) will be at least 3 in one molecule, whereby it is possible to increase the efficiency of the curing reaction of the finally obtainable curable fluorinated polymer, as compared with a linear iodine terminal polymer (X).

The chain transfer agent may be a conventional chain transfer agent having iodine atoms. From the viewpoint of the reactivity with the fluoromonoenes (a) and the fluorodiene (b), the chain transfer agent is preferably $IR^{f2}I$.

$R^{f2}$ is a $C_{1-12}$ fluoroalkylene group, or a $C_{2-12}$ fluoroalkylene group (oxafluoroalkylene group) having at least one etheric oxygen atom between carbon atoms. $R^{f2}$ is preferably a $C_{3-12}$ fluoroalkylene group or oxafluoroalkylene group, more preferably a $C_{3-12}$ perfluoroalkylene group.

$IR^{f2}I$ is preferably diiododifluoromethane, 1,2-diiodoperfluoroethane, 1,3-diiodoperfluoropropane, 1,4-diiodoperfluorobutane, 1,5-diiodoperfluoropentane, 1,6-diiodoperfluorohexane, 1,7-diiodoperfluoroheptane, 1,8-diiodoperfluorooctane or the like.

$IR^{f2}I$ is particularly preferably 1,4-diiodoperfluorobutane or 1,6-diiodoperfluorohexane.

The chain transfer agent may be charged all at once at the initial stage of the radical co-polymerization or may be sequentially supplied. From the viewpoint of uniformity of the molecular weight of the iodine terminal polymer (X), it is preferred to charge it all at once at the initial stage.

The amount of the chain transfer agent to be used, is preferably from 0.01 to 5 mol%, more preferably from 0.05 to 1 mol%, to the total number of moles of all monomers in the monomer component.

The radical polymerization initiator may be a conventional radical polymerization initiator which is commonly used for the production of a fluorinated polymer. The radical polymerization initiator may suitably be selected for use depending upon the polymerization method. In the case of polymerization in an aqueous medium (such as an emulsion polymerization method), a water-soluble radical polymerization initiator is preferred. In the case of solution polymerization, an organic peroxide initiator or an azo type initiator is preferred.

The water-soluble radical polymerization initiator may, for example, be a persulfate such as ammonium persulfate, hydrogen peroxide, or an organic initiator such as disuccinic acid peroxide or azobisisobutylamidine dihydrochloride. Further, it is also possible to use a redox initiator composed of a combination of a persulfate or hydrogen peroxide and a reducing agent such as sodium hydrogen sulfite or sodium thiosulfate, or an inorganic initiator having a small amount of iron, ferrous salt, silver sulfate or the like further incorporated to such a redox initiator.

The radical polymerization initiator may be charged all at once at the initial stage of the radical co-polymerization or may be sequentially supplied. From the viewpoint of uniformity of the polymerization reaction, controllability of the molecular weight of the obtainable iodine terminal polymer (X), etc., it is preferred to supply it sequentially depending upon the progress of the polymerization reaction.

The amount of the radical polymerization initiator is preferably from 0.01 to 3 mass%, more preferably from 0.1 to 1 mass%, to the total mass of all monomers in the monomer component.

In the case of polymerization in an aqueous medium, a buffer for pH may be used together with a chain transfer agent and a radical polymerization initiator.

The buffer for pH may, for example, be an inorganic salt (such as disodium hydrogenphosphate, sodium dihydrogenphosphate, sodium hydrogencarbonate, or a hydride thereof) or the like.

The content of iodine atoms in the iodine terminal polymer (X) is preferably from 0.001 to 0.1 mmol/g, more preferably from 0.005 to 0.05 mmol/g. When the content of iodine atoms is at least the lower limit value, it is possible to sufficiently introduce constituent units (B) based on the fluorodiene (b) to terminals of the iodine terminal polymer (X). When the content of iodine atoms is at most the upper limit value, the molecular weight between crosslinking points in the cured product becomes large, whereby the cured product can exhibit the properties as an elastomer more sufficiently.

As the combination of constituent units in the iodine terminal polymer (X) (provided that constituent units to constitute branch points are excluded), the following combinations may be mentioned.

A combination of constituent units based on vinylidene fluoride and constituent units based on hexafluoropropylene.

A combination of constituent units based on vinylidene fluoride, constituent units based on TFE and constituent units based on hexafluoropropylene.

A combination of constituent units based on vinylidene fluoride and constituent units based on CTFE.

A combination of constituent units based on TFE and constituent units based on propylene.

A combination of constituent units based on TFE, constituent units based on propylene and constituent units based on vinylidene fluoride.

A combination of constituent units based on TFE and constituent units based on PAVE.

A combination of constituent units based on vinylidene fluoride, constituent units based on TFE and constituent units based on PAVE.

A combination of constituent units based on TFE, constituent units based on propylene and constituent units based on PAVE.

Among these combinations, the combination of constituent units based on TFE and constituent units based on PAVE is preferred, since it is thereby possible to satisfy both heat resistance and chemical resistance.

(Step (β))

Step (β) is a step of subjecting the fluorodiene (b) to radical polymerization in the presence of the iodine-terminal polymer (X) to introduce constituent units (B) based on the fluorodiene (b) to terminals of the iodine-terminal polymer (X).

In step (β), it is preferred that, as the case requires, in the presence of a radical polymerization initiator, the iodine terminal polymer (X) and the fluorodiene (b) are heated thereby to introduce constituent units (B) based on the fluorodiene (b) to terminals of the iodine-terminal polymer (X).

As the fluorodiene (b) to be reacted for addition reaction to terminals of the iodine terminal polymer (X), ones described above as monomers to constitute constituent units (B) may be mentioned; the fluorodienes (b1) to (b5) are preferred; the fluorodiene (b1) is more preferred; and the fluorodiene (b11) is further preferred.

The fluorodiene (b) is a non-cyclopolymerizable fluorinated compound having two polymerizable double bonds in its molecule. That is, at the time of producing a curable fluorinated polymer, one of the two polymerizable double bonds in the fluorodiene (b) does not contribute to the addition reaction to the iodine terminal polymer (X) and will remain as a double bond as it is even after the reaction.

Specifically, a radical formed by heat decomposition of the radical polymerization initiator will withdraw an iodine atom of the iodine terminal polymer (X) to form a radical at the terminal of the iodine terminal polymer (X), whereupon the addition reaction of the fluorodiene (b) will take place. By the radical addition reaction, one or plural molecules of the fluorodiene (b) will add to the terminal of the iodine terminal polymer (X), depending upon the amount of the fluorodiene (b) used. At that time, one of the two polymerizable double bonds in the fluorodiene (b) will react, and the other will remain as a double bond as it is. The remaining double bond becomes a crosslinkable moiety, and thus, the curable fluorinated polymer will have self-curability even without addition of a crosslinking aid or the like.

The amount of the fluorodiene (b) to be charged is preferably from 1 to 20 mass%, more preferably from 3 to 10 mass%, to the mass of the iodine terminal polymer (X). When the amount of the fluorodiene (b) to be charged is at least the lower limit value, it is possible to sufficiently introduce constituent units (B) based on the fluorodiene (b) to terminals of the iodine terminal polymer (X). Therefore, the curing reaction of the obtainable curable fluorinated polymer becomes sufficient, and the heat resistance of the cured product becomes sufficient. When the amount of the fluorodiene (b) to be charged is at most the upper limit value, the fluorodiene (b) tends to hardly form a polymer by itself and will not remain in the curable fluorinated polymer. Thus, a decrease in the heat resistance of the cured product can be prevented.

The addition reaction of the fluorodiene (b) to the iodine terminal polymer (X) is preferably carried out in the presence of a solvent.

The solvent is preferably a fluorinated solvent having a high affinity to the iodine terminal polymer (X). As such

a fluorinated solvent, dichloropentafluoropropane (HCFC-225), $CF_3CH_2CF_2H$ (HFC-245fa), $CF_3CF_2CH_2CF_2H$ (HFC-365mfc), perfluorohexane, perfluorooctane, perfluoro(2-butyltetrahydrofuran), perfluoro(tributylamine), $CF_3CF_2CF_2CF_2CF_2CF_2H$, $CF_3CH_2OCF_2CF_2H$, $CF_3CH_2OCH_2CF_3$, $CF_3CF_2OCF_2CF_2OCF_2CF_3$, etc. may be mentioned. In a case where the iodine terminal polymer (X) is a polymer having constituent units based on TFE and constituent units based on PAVE, $CF_3CF_2CF_2CF_2CF_2CF_2H$ is most preferred as the solvent.

As the radical polymerization initiator to be used for the addition reaction of the fluorodiene (b), various organic peroxides or azo compounds may be mentioned whereby the temperature at which the half-life period of the radical polymerization initiator would be 10 hours (hereinafter referred to as the 10 hour half-life period temperature) is from 20 to 120°C.

The concentration of the radical polymerization initiator in the reaction solution is preferably from 0.1 to 5 mass%, more preferably from 0.5 to 2 mass%.

The reaction temperature is preferably determined depending upon the balance of the 10 hour half-life period temperature of the radical polymerization initiator and the addition rate of the fluorodiene (b). The reaction temperature is preferably from 20 to 120°C, more preferably from 40 to 90°C.

Further, in a case where the fluorodiene (b) is used in combination in step ($\alpha$), the fluoromonoene (a) and one of the two double bonds of the fluorodiene (b) are copolymerized so that a constituent unit (B) is introduced to the iodine terminal polymer (X). And, the other double bond in the constituent unit (B) tends to readily copolymerize with the fluoromonoene (a) which is present in a large amount, and thus, both double bonds of the fluorodiene (b) undergo polymerization, whereby the constituent unit (B) is considered to form a branch point.

On the other hand, in step ($\beta$), as a monomer, only the fluorodiene (b) is used. In such a case, when one of the double bonds in the fluorodiene (b) reacts to introduce a constituent unit (B) to a terminal of the polymer (X), the other double bond in the constituent unit (B) does not have a high reactivity with the fluorodiene (b) and therefore will remain as it is and become a crosslinkable moiety.

(Advantageous effects)

In the process for producing a curable fluorinated polymer of the present invention as described above, a monomer component containing the fluoromonoenes (a) is subjected to radical copolymerization in the presence of a chain transfer agent having iodine atoms to obtain an iodine terminal polymer (X), and then, constituent units (B) based on the fluorodiene (b) are introduced to terminals of the iodine terminal polymer (X), whereby it is possible to simply produce the curable fluorinated polymer of the present invention.

<Fluorinated polymer cured product>

The fluorinated polymer cured product of the present invention is one obtained by curing the curable fluorinated polymer of the present invention in the presence of an organic peroxide. The fluorinated polymer cured product of the present invention is preferably a fluoroelastomer having the properties as an elastomer, more preferably a perfluoroelastomer.

(Curing of curable fluorinated polymer)

The curable fluorinated polymer of the present invention can be cured by blending an organic peroxide and, as the case requires, an acid acceptor and various additives, thereto, followed by heating. One having the above components blended to the curable fluorinated polymer may be referred to also as a curable fluorinated polymer composition.

Further, the curable fluorinated polymer can be cured by itself by ultraviolet irradiation. Here, curing is considered to proceed as a reaction takes place between polymerizable double bonds (crosslinkable moieties) derived from constituent units (B).

The organic peroxide may be one which readily generates radicals by heating.

As such an organic peroxide, preferred is one whereby the temperature at which the half-life period becomes 1 minute (which may be referred to also as the 1 minute half-life period temperature) is from 130 to 220°C. As the organic peroxide, 1,1 -di(t-hexylperoxy)-3,5,5-trimethylcyclohexane, 2,5-dimethylhexane-2,5-dihydroperoxide, di-t-butyl peroxide, t-butylcumyl peroxide, dicumyl peroxide, $\alpha,\alpha'$-bis(t-butylperoxy)-p-diisopropylbenzene, 2,5-dimethyl-2,5-di(t-butylperoxy)-hexane, 2,5-dimethyl-2,5-di(t-butylperoxy)-hexyne-3, dibenzoyl peroxide, t-butyl peroxybenzene, 2,5-dimethyl-2,5-di(benzoylperoxy)hexane, t-butylperoxy maleic acid, t-hexylperoxyisopropyl monocarbonate, etc. may be mentioned. As the organic peroxide, particularly preferred is $\alpha,\alpha'$-bis(t-butylperoxy)-p-diisopropylbenzene.

As the organic peroxide, one type may be used alone, or two or more types may be used in combination.

The amount of the organic peroxide to be blended is preferably from 0.1 to 5 mass%, more preferably from 0.2

to 4 mass%, further preferably from 0.5 to 3 mass%. When the amount of the organic peroxide to be blended is at least the lower limit value, the efficiency of the curing reaction is improved. When the amount of the organic peroxide to be blended is at most the upper limit value, it is easy to suppress the production amount of a non-effective decomposition product which does not contribute to the radical reaction.

The acid acceptor is a component to accelerate the curing reaction.

As such an acid acceptor, magnesium oxide, zinc oxide, calcium hydroxide, calcium oxide, lead oxide, dibasic lead phosphite, hydrotalcite, etc. may be mentioned. As the acid acceptor, preferred is magnesium oxide or zinc oxide, and more preferred is magnesium oxide. As the acid acceptor, one type may be used alone, or two or more types may be used in combination.

The amount of the acid acceptor to be blended, is preferably from 0.1 to 20 mass%, more preferably from 0.2 to 10 mass%, to the mass of the curable fluorinated polymer. When the amount of the acid acceptor to be blended is at least the lower limit value, the effects by the acid acceptor tend to be readily obtainable. When the amount of the acid acceptor to be blended is at most the upper limit value, it is easy to prevent its adverse influence over the physical properties such that the cured product tends to be hard more than necessary.

The curable fluorinated polymer of the present invention has high transparency to transmit ultraviolet rays therethrough, whereby polymerizable double bonds (crosslinkable moieties) derived from constituent units (B) undergo a curing reaction by ultraviolet irradiation. In the case of irradiating ultraviolet rays with wavelengths of from 200 to 300 nm, a photoinitiator or the like may not be blended.

The method for blending the organic peroxide and the acid acceptor to the curable fluorinated polymer of the present invention is not particularly limited, and a conventional method may be employed. Preferred is a method of kneading the curable fluorinated polymer, the organic peroxide, and the acid acceptor or other additives to be blended as the case requires, by means of a kneading device such as a twin roll mill, a Banbury mixer or a kneader. Further, it is also possible to employ a method of kneading the various components in such a state that they are dissolved or dispersed in a solvent.

In blending the respective components, it is preferred that firstly, components which are less reactive or decomposable by heat generation are sufficiently kneaded with the curable fluorinated polymer, and then, reactive components or decomposable components are kneaded therewith.

For example, the organic peroxide is preferably kneaded later. In order to prevent a curing reaction during the kneading, it is preferred to cool the kneading device with water to keep it within a temperature range of from 20 to 120°C.

As the method for molding the curable fluorinated polymer, in each case of curing by means of an organic peroxide and curing by means of ultraviolet irradiation, a conventional molding method may be employed such as extrusion molding, injection molding, transfer molding or press molding.

The heating temperature during the molding is preferably from 130 to 220°C, more preferably from 140 to 200°C, particularly preferably from 150 to 200°C.

It is also preferred that the fluorinated polymer cured product cured by heating under the above conditions (primary cured product) is further heated for curing by e.g. an oven using, as a power source, electricity, hot air, steam or the like (hereinafter referred to as second curing), as the case requires. By carrying out the second curing, the residue of the organic peroxide contained in the cured product will be decomposed and evaporated, and its amount will be reduced.

The heating temperature during the second curing is preferably from 150 to 280°C, more preferably from 180 to 260°C, particularly preferably from 200 to 250°C.

The heating time in the second curing is preferably from 1 to 48 hours, more preferably from 2 to 24 hours.

(Applications)

Utilizing its curability, the curable fluorinated polymer of the present invention is useful for various applications including rubbers, resins, coating agents, coating materials, sealants, etc.

The curable fluorinated polymer of the present invention is utilized for various rubber products or cured resin products in a wide range of fields including transportation machines (such as automobiles), general machinery, electrical equipment, semi-conductor producing devices, chemical plant devices, etc.

The rubber products may, for example, be sealing materials (such as O-rings, seats, gaskets, oil seals or bearing seals), diaphragms, buffer materials, a vibration-proofing materials, wire coating materials, industrial belts, tubes, hoses, seats, etc.

The cured resin products may, for example, be sealing materials for light-emitting devices (such as LED), power semi-conductor sealing materials, circuit board sealing materials, sealants, adhesives, etc.

(Advantageous effects)

The fluorinated copolymer cured product of the present invention as described above is excellent in heat

resistance and chemical resistance and exhibits excellent properties as an elastomer, since it is one obtained by curing the curable fluorinated polymer of the present invention in the presence of an organic peroxide.

Further, by changing the copolymer composition, molecular weight, amount of polymerizable double bonds to be introduced, etc. in the curable fluorinated polymer of the present invention, it is possible to produce a wide range of cured products ranging from one which shows rubber properties to one which is relatively hard and shows resin properties with relatively less elongation.

EXAMPLES

Now, the present invention will be described in detail with reference to Examples, but it should be understood that the present invention is by no means restricted by such description.

(Intrinsic viscosity)

By means of an Ubbelohde viscometer, the intrinsic viscosity of a polymer was measured in a high temperature water tank at 30°C and used as an index for the molecular weight. As the solvent for the measurement, a fluorinated solvent (CT-solv100E, manufactured by Asahi Glass Co., Ltd.) was used.

(Content of polymerizable double bonds)

With respect to a film-form polymer, the infrared absorption spectrum was measured, and the content of vinyl groups ($CF_2$=CFO-) in the polymer was calculated by the following formula (1) from the area of the absorption peak in the vicinity of 1843 $cm^{-1}$ and the molar absorption coefficient of vinyl groups in C4DVA monomer: 541.8 ($L/(mol\cdot cm^{-2})$).

$$\varepsilon = A/(cl) \qquad (1)$$

wherein ε is the molar absorption coefficient, A is the area of the absorption peak in the vicinity of 1,843 $cm^{-1}$, c is the molar concentration (mol/L), and l is the thickness (cm) of the film. The content of polymerizable double bonds (mmol/g) was calculated using the density 2.0 (g/L).

(Content of iodine atoms)

For the content of iodine atoms in a polymer, 2 mg of a polymer sample was burnt, and the generated gas was absorbed in a 0.02 mass% hydrazine aqueous solution, whereupon with respect to the solution thereby obtained, the content of iodine atoms was measured by an ICP (Inductively Coupled Plasma) light-emitting method (measuring device: ELAN DRCII, manufactured by PerkinElmer Inc.).

(Durometer Hardness)

The hardness (Shore A) of a cured product was measured at 25°C by means of Type A Durometer Hardness Meter in accordance with JIS K6253 (2006).

(Heat resistance)

After heating a cured product for a predetermined time at a predetermined temperature in a hot air oven, the Durometer hardness was measured at 25°C, and from its change, the heat resistance of the cured product was evaluated. One with less change is excellent in heat resistance. A cured product, of which the hardness could not be measured as it was fluidized and deformed, was rated as x (no good).

(Chemical resistance)

A cured product was immersed in ethylenediamine at 60°C for 12 hours, and from its change, the chemical resistance was evaluated. A cured product, of which no coloration or swelling was observed, was rated as ○ (good), and a cured product which was colored yellow, was rated as × (no good).

[Synthesis Example 1]

Synthesis of iodine terminal polymer (X1):

Into a stainless steel pressure resistant reactor having an internal capacity of 20 L (liters) and equipped with anchor type stirring blades, 8,800 g of deaerated ion-exchanged water, 220 g of $CF_3CF_2OCF_2CF_2OCF_2COONH_4$, 0.64 g of disodium hydrogenphosphate 12-hydrate and 9 g of C4DVE were charged, and the gas phase was replaced with nitrogen. While stirring at a rotational speed of 375 rpm, 563 g of $CF_2$=CFO-$CF_3$ (hereinafter referred to as PMVE) and 115 g of TFE were charged, and the internal temperature was raised to 80°C. The internal pressure was 0.90 MPa-G. Further, 25 mL of a 2.5 mass% aqueous solution of ammonium persulfate was added to initiate polymerization.

Along with the progress of polymerization, the internal pressure of the reactor decreases, and therefore, when the internal pressure decreased to 0.89 MPa-G, TFE gas was injected to raise the internal pressure to 0.91 MPa-G. The polymerization reaction was continued by repeating this operation to maintain the internal pressure of the reactor to be from 0.89 to 0.91 MPa-G. When the amount of TFE added reached 30 g, 8 g of 1,4-diiodoperfluorobutane was added by nitrogen backpressure. Thereafter, every time when 80 g of TFE was added, 70.5 g of PMVE was added by nitrogen backpressure. The injection of PMVE was continued till 1,120 g of TFE was added. The total amount of PMVE added from the initiation of polymerization was 987 g.

When the total amount of TFE added after the addition of the ammonium persulfate aqueous solution reached 1,200 g, the addition of TFE was terminated, and the internal temperature of the reactor was cooled to 10°C to terminate the polymerization reaction. Then, 9,800 g of a latex of iodine terminal polymer (X1) was obtained. The polymerization time was 9.5 hours.

Then, while stirring 5,000 g of the latex, 50 g of 96 mass% sulfuric acid was added to the latex to coagulate the iodine terminal polymer (X1). The coagulate was separated and washed 10 times with 5,000 g of ultrapure water each time. Further, it was vacuum-dried at 50°C for 12 hours to obtain a white iodine terminal polymer (X1).

The composition of the iodine terminal polymer (X1) determined by $^{19}$F-NMR was constituent units based on TFE/constituent units based on PMVE/constituent units based on C4DVE = 76/24/0.05 (molar ratio), and no signal attributable to a polymerizable double bond derived from C4DVE was observed. Thus, it was assumed that vinyl groups in C4DVE were all consumed during polymerization, and no vinyl group was present in the iodine terminal polymer (X1).

The intrinsic viscosity of the iodine terminal polymer (X1) was 0.42 dL/g. The content of iodine atoms in the iodine terminal polymer (X1) was 9.4 $\mu$mol/g.

[Synthesis Example 2]

Synthesis of iodine terminal polymer (X2):

Iodine terminal polymer (X2) was obtained in the same manner as in Synthesis Example 1 except that no C4DVE was used.

The composition of the iodine terminal polymer (X2) was constituent units based on TFE/constituent units based on PMVE = 69/31 (molar ratio). The intrinsic viscosity of the iodine terminal polymer (X2) was 0.68 dL/g. The content of iodine atoms in the iodine terminal polymer (X2) was 3.5 $\mu$mol/g.

[Example 1]

Into a 50 mL two-necked flask, 2.0 g of the iodine terminal polymer (X1), 17.9 g of a fluorinated solvent (HFC-52-13p, AC-2000 manufactured by Asahi Glass Co., Ltd.) and 6.0 of C4DVE were put. Then, 0.0264 g of an azo-type radical polymerization initiator (V-601, manufactured by Wako Pure Chemical Industries, Ltd.) was added. The flask was cooled to about 0°C in an ice bath and subjected to a reduced pressure deaeration operation. Then, the flask was heated to 70°C, and a reaction was carried out for 14 hours. After the reaction, to the reaction crude liquid, 20 g of AC-2000 was added, and by dropping the reaction crude liquid into 100 mL of methanol, a precipitate was obtained. The precipitate was washed with a fluorinated solvent (HCFC-225, AK-225 manufactured by Asahi Glass Co., Ltd.) and dried in a nitrogen stream to obtain 1.50 g of a curable fluorinated polymer (P11).

The content of polymerizable double bonds in the curable fluorinated polymer (P11) was 0.059 mmol/g.

The intrinsic viscosity of the curable fluorinated polymer (P11) was 0.45 dL/g and thus showed a value close to the iodine terminal polymer (X1).

The composition of the curable fluorinated polymer (P11) was constituent units based on TFE/constituent units based on PMVE/constituent units based on C4DVE = 76.0/24.0/1.1 (molar ratio).

Into a glass container, 1.1 g of the curable fluorinated polymer (P11), 19.6 g of AC-2000, 0.011 g of 2,5-dimethyl-2,5-di(t-butylperoxy)hexane (Perhexa 25B, manufactured by Nippon Oil & Fats Co., Ltd.) and 0.035 g of magnesium

oxide (Kyowa Mag #150, manufactured by Kyowa Chemical Industry Co., Ltd.) were added and stirred to obtain a dispersion of a curable fluorinated polymer composition. The dispersion was cast on a polytetrafluoroethylene (hereinafter referred to as PTFE) sheet and heat-dried to remove the solvent, followed by hot pressing at 200°C for 20 minutes to prepare a fluorinated copolymer cured product film having a thickness of 1 mm. Three such films were overlaid one another to a thickness of 3 mm, and the hardness was measured at 25°C and found to be A52 thus indicating a flexible elastomer. After heating the cured product at 300°C for 72 hours, the hardness was A63, and thus, no decrease in hardness was observed. Further, after heating it at 325°C for 48 hours, although a slight decrease in hardness was observed at a level of A44, the flexibility as an elastomer was maintained, and the heat resistance was found to be high. The results are shown in Table 1.

Further, the cured product was immersed in ethylenediamine at 60°C for 12 hours, but no coloration or swelling was observed, and thus, the chemical resistance was found to be high.

[Example 2]

Into a 50 mL two-necked flask, 2.0 g of the iodine terminal polymer (X1), 18.0 g of AC-2000 and 10.0 of C4DVE were put. Then, 0.0307 g of V-601 was added. The flask was cooled to about 0°C in an ice bath and subjected to a reduced pressure deaeration operation. Then, the flask was heated to 70°C, and a reaction was carried out for 14 hours. After the reaction, to the reaction crude liquid, 20 g of AC-2000 was added, and by dropping the reaction crude liquid into 100 mL of methanol, a precipitate was obtained. The precipitate was washed with AK-225 and dried in a nitrogen stream to obtain 1.55 g of a curable fluorinated polymer (P12).

The content of polymerizable double bonds in the curable fluorinated polymer (P12) was 0.090 mmol/g.

The intrinsic viscosity of the curable fluorinated polymer (P12) was 0.45 dL/g and thus showed a value close to the iodine terminal polymer (X1).

The composition of the curable fluorinated polymer (P12) was constituent units based on TFE/constituent units based on PMVE/constituent units based on C4DVE = 76.0/24.0/1.1 (molar ratio).

Using the curable fluorinated polymer (P12), a fluorinated polymer cured product film was prepared in the same manner as in Example 1. Three such films were overlaid one another to a thickness of 3 mm, and the hardness was measured and found to be A59 thus indicating a flexible elastomer. After heating the cured product at 300°C for 72 hours, the hardness was A66. Further, also after heating it at 325°C for 72 hours, the hardness was A59, and thus, the flexibility as an elastomer was maintained, and the heat resistance was found to be high. The results are shown in Table 1.

Further, the cured product was immersed in ethylenediamine at 60°C for 12 hours, but no coloration or swelling was observed, and thus, the chemical resistance was found to be high.

[Example 3]

Into a 50 mL two-necked flask, 2.0 g of the iodine terminal polymer (X1), 18.4 g of AC-2000 and 20.0 of C4DVE were put. Then, 0.0461 g of V-601 was added. The flask was cooled to about 0°C in an ice bath and subjected to a reduced pressure deaeration operation. Then, the flask was heated to 70°C, and a reaction was carried out for 14 hours. After the reaction, to the reaction crude liquid, 20 g of AC-2000 was added, and by dropping the reaction crude liquid into 100 mL of methanol, a precipitate was obtained. The precipitate was washed with AK-225 and dried in a nitrogen stream to obtain 1.97 g of a curable fluorinated polymer (P13).

The content of polymerizable double bonds in the curable fluorinated polymer (P13) was 0.144 mmol/g.

The intrinsic viscosity of the curable fluorinated polymer (P13) was 0.44 dL/g and thus showed a value close to the iodine terminal polymer (X1).

The content of iodine atoms in the curable fluorinated polymer (P13) was 2.1 μmol/g and thus found to be decreased as compared with the iodine terminal polymer (X1).

The composition of the curable fluorinated polymer (P13) was constituent units based on TFE/constituent units based on PMVE/constituent units based on C4DVE = 76.0/24.0/1.8 (molar ratio).

Using the curable fluorinated polymer (P13), a fluorinated polymer cured product film was prepared in the same manner as in Example 1. Three such films were overlaid one another to a thickness of 3 mm, and the hardness was measured and found to be A62 thus indicating a flexible elastomer. After heating the cured product at 300°C for 72 hours, the hardness was A69. Further, also after heating it at 325°C for 72 hours, the hardness was A64, and thus, the flexibility as an elastomer was maintained, and the heat resistance was found to be high. The results are shown in Table 1.

Further, the cured product was immersed in ethylenediamine at 60°C for 12 hours, but no coloration or swelling was observed, and thus, the chemical resistance was found to be high.

[Example 4]

Into a 50 mL two-necked flask, 2.0 g of the iodine terminal polymer (X2), 17.9 g of AC-2000 and 40.0 of C4DVE were put. Then, 0.0612 g of V-601 was added. The flask was cooled to about 0°C in an ice bath and subjected to a reduced pressure deaeration operation. Then, the flask was heated to 70°C, and a reaction was carried out for 15 hours. After the reaction, to the reaction crude liquid, 20 g of AC-2000 was added, and by dropping the reaction crude liquid into 100 mL of methanol, a precipitate was obtained. The precipitate was washed with AK-225 and dried in a nitrogen stream to obtain 1.75 g of a curable fluorinated polymer (P21).
The content of polymerizable double bonds in the curable fluorinated polymer (P21) was 0.115 mmol/g.
The intrinsic viscosity of the curable fluorinated polymer (P21) was 0.65 dL/g and thus showed a value close to the iodine terminal polymer (X2).
The content of iodine atoms in the curable fluorinated polymer (P21) was 0.5 μmol/g and thus found to be decreased as compared with the iodine terminal polymer (X2).
The composition of the curable fluorinated polymer (P21) was constituent units based on TFE/constituent units based on PMVE/constituent units based on C4DVE = 69.0/31.0/1.5 (molar ratio).
Using the curable fluorinated polymer (P21), a fluorinated polymer cured product film was prepared in the same manner as in Example 1. Three such films were overlaid one another to a thickness of 3 mm, and the hardness was measured and found to be A62 thus indicating a flexible elastomer. After heating the cured product at 300°C for 72 hours, the hardness was A64, and no decrease in hardness was observed. Further, after heating it at 325°C for 24 hours, the hardness was A64, and thus, the flexibility as an elastomer was maintained, and the heat resistance was found to be high. The results are shown in Table 1.
Further, the cured product was immersed in ethylenediamine at 60°C for 12 hours, but no coloration or swelling was observed, and thus, the chemical resistance was found to be high.

[Comparative Example 1]

Into a glass container, 1.0 g of the iodine terminal polymer (X2) containing no polymerizable double bond, 19.6 g of AC-2000, 0.011 g of Perhexa 25B, 0.029 g of magnesium oxide and 0.049 g of triallyl cyanurate were added and stirred to obtain a dispersion of a fluorinated polymer composition. The dispersion was cast on a PTFE sheet and heat-dried to remove the solvent, followed by hot pressing at 200°C for 20 minutes to prepare a fluorinated copolymer cured product film having a thickness of 1 mm. Three such films were overlaid one another to a thickness of 3 mm, and the hardness was measured at 25°C and found to be A57 thus indicating a flexible elastomer. After heating the cured product at 300°C for 72 hours, the hardness was A52, and thus, decrease in hardness was slight, but after heating it at 320°C for 24 hours, the cured product was fluidized and deformed, and the hardness was not measurable. The results are shown in Table 1.

[Comparative Example 2]

In the same manner as in Synthesis Example 4 in Patent Document 7, a side chain vinyl group-containing fluorinated copolymer comprising constituent units based on TFE/constituent units based on C4DVE/constituent units based on $CF_2$=CFO-$CF_2CF_2CF_3$ = 65/10/25 (molar ratio) was obtained.
The mass average molecular weight was 8,600; the content of polymerizable double bonds was 0.430 mmol/g; and the intrinsic viscosity was 0.044 dL/g.
The side chain vinyl group-containing fluorinated copolymer was one having a larger number of vinyl groups and a smaller molecular weight than the curable fluorinated polymer of the present invention.
Into a glass container, 1.11 g of the side chain vinyl group-containing fluorinated copolymer, 19.9 g of AC-2000, 0.038 g of magnesium oxide and 0.019 g of Perhexa 25B were added and stirred to obtain a dispersion-state polymer composition. The polymer composition was cast into a PTFE casting mold and heat-dried to remove the solvent, and finally heated at 200°C for 2.5 hours to obtain a soft resin cured product of 1.5 cm x 1.5 cm with a thickness of 2 mm. The hardness of the cured product at 25°C was A53. After the cured product was heated at 300°C for 72 hours, the cured product was fluidized and deformed, and the hardness was not measurable.
Further, the cured product was immersed in ethylenediamine at 60°C for 12 hours, whereby it was colored yellow, and thus, the chemical resistance was found to be low.

[Example 5]

Into a 50 mL two-necked flask, 3.03 g of the iodine terminal polymer (X1), 30.4 g of AC-2000 and 18.0 g of $CH_2=CH(CF_2)_6CH=CH_2$ (C6HDV) were put. Then, 0.0848 g of V-601 was added. The flask was cooled to about 0°C in

an ice bath and subjected to a reduced pressure deaeration operation. Then, the flask was heated to 75°C, and a reaction was carried out for 18 hours. After the reaction, to the reaction crude liquid, 100 g of AC-2000 was added, and by dropping the reaction crude liquid into 250 mL of methanol, a precipitate was obtained. The precipitate was washed with AK-225 and dried in a nitrogen stream to obtain 2.93 g of a curable fluorinated polymer (P14).

The content of polymerizable double bonds in the curable fluorinated polymer (P14) was 0.101 mmol/g.

The intrinsic viscosity of the curable fluorinated polymer (P22) was 0.460 dL/g and thus showed a value close to the iodine terminal polymer (X1).

The content of iodine atoms in the curable fluorinated polymer (P14) was 1.9 μmol/g and thus found to be decreased as compared with the iodine terminal polymer (X1).

The composition of the curable fluorinated polymer (P22) was constituent units based on TFE/constituent units based on PMVE/constituent units based on C4DVE/constituent units based on C6HDV = 76/24/0.05/0.05 (molar ratio).

Using the curable fluorinated polymer (P14), a fluorinated polymer cured product film was prepared in the same manner as in Example 1. Three such films were overlaid one another to a thickness of 3 mm, and the hardness was measured and found to be A66 thus indicating a flexible elastomer. After heating the cured product at 300°C for 72 hours, the hardness was measured and found to be A65, and no decrease in hardness was observed. Further, after heating it at 325°C for 72 hours, the hardness was A62, and thus, the flexibility as an elastomer was maintained, and the heat resistance was found to be high. The results are shown in Table 1.

Further, the cured product was immersed in ethylenediamine at 60°C for 12 hours, but no coloration or swelling was observed, and thus, the chemical resistance was found to be high.

[Table 1]

| | | Ex. 1 | Ex. 2 | Ex. 3 | Ex. 4 | Ex. 5 | Comp. Ex. 1 | Comp. Ex. 2 |
|---|---|---|---|---|---|---|---|---|
| Content of vinyl groups | (mmol/g) | 0.0588 | 0.0900 | 0.144 | 0.115 | 0.101 | 0 | 0.43 |
| Intrinsic viscosity | (dL/g) | 0.450 | 0.453 | 0.439 | 0.646 | 0.460 | 0.42 | 0.044 |
| Heat resistance (Hardness Shore A) | Initial stage (Hot pressing at 200°C) | 52 | 59 | 67 | 62 | 66 | 57 | 53 |
| | After 72 hours at 300°C | 63 | 66 | 69 | 64 | 65 | 52 | × |
| | After 24 hours at 325°C | 42 | 58 | 64 | 64 | 63 | × | × |
| | After 48 hours at 325°C | 44 | 56 | 63 | × | 62 | × | × |
| | After 72 hours at 325°C | × | 59 | 64 | × | 62 | × | × |
| Chemical resistance | After immersion in ethylene diamine at 60°C for 12 hours | ○ | ○ | ○ | ○ | ○ | - | × |

INDUSTRIAL APPLICABILITY

The fluorinated polymer cured product of the present invention is excellent in heat resistance and chemical resistance and thus is useful as e.g. rubber products (e.g. sealing materials (O rings, seats, gaskets, oil seals, bearing seals, etc.), diaphragms, buffer materials, vibration-proofing materials, electric wire coating materials, industrial belts, tubes, hoses, seats, etc.), cured resin products (e.g. sealants for light emitting devices, power semiconductor sealants, circuit board insulating materials, sealing materials, adhesives, etc.) etc.

The entire disclosure of Japanese Patent Application No. 2012-182281 filed on August 21, 2012 including specification, claims, drawings and summary is incorporated herein by reference in its entirety.

## Claims

1. A curable fluorinated polymer having constituent units (A) based on fluoromonoenes (a) and constituent units (B) based on a non-cyclopolymerizable fluorodiene (b), in which the content of polymerizable double bonds is from 0.01 to 0.5 mmol/g, and of which the intrinsic viscosity is from 0.1 to 1 dL/g.

2. The curable fluorinated polymer according to Claim 1, wherein the fluoromonoenes (a) are at least two types selected from the group consisting of tetrafluoroethylene, hexafluoropropylene, vinylidene fluoride and $CF_2$=CFO-$R^{f1}$ (wherein $R^{f1}$ is a $C_{1-10}$ fluoroalkyl group, or a $C_{2-10}$ fluoroalkyl group having at least one etheric oxygen atom between carbon atoms).

3. The curable fluorinated polymer according to Claim 1 or 2, which further has constituent units (C) based on at least one monomer (c) selected from the group consisting of propylene, ethylene and isobutylene.

4. The curable fluorinated polymer according to any one of Claims 1 to 3, wherein the content of the constituent units (A) is from 90 to 99.9 mol% to the total number of moles of the constituent units (A) and the constituent units (B).

5. The curable fluorinated polymer according to any one of Claims 1 to 4, wherein the content of the constituent units (B) is from 0.1 to 10 mol% to the total number of moles of the constituent units (A) and the constituent units (B).

6. The curable fluorinated polymer according to any one of Claims 3 to 5, which contains the constituent units (C) and in which the content of the constituent units (C) is from 0.1 to 100 mol% to the total number of moles of the constituent units (A) and the constituent units (B).

7. The curable fluorinated polymer according to any one of Claims 1 to 6, wherein the constituent units (B) having polymerizable double bonds are present at a terminal of a molecular chain having the constituent units (A).

8. The curable fluorinated polymer according to Claim 7, wherein from 1.1 to 40 constituent units (B) having polymerizable double bonds are present per one terminal of a molecular chain having the constituent units (A).

9. The curable fluorinated polymer according to any one of Claims 1 to 8, wherein the fluoromonoenes (a) are tetrafluoroethylene and said $CF_2$=CFO-$R^{f1}$.

10. The curable fluorinated polymer according to any one of Claims 1 to 9, wherein the fluorodiene (b) is at least one type selected from the group consisting of the following formulae (b1) to (b5):

$CF_2$=CFO-$Q^{f1}$-OCF=$CF_2$ (b1)

$CH_2$=CFC$F_2$O-$Q^{f2}$-OC$F_2$CF=$CH_2$ (b2)

$CH_2$=CFC$F_2$O-$Q^{f3}$-OCF=$CF_2$ (b3)

$CH_2$=CH-$Q^{f4}$-CH=$CH_2$ (b4)

$CH_2$=CH-$Q^{f5}$-OCF=$CF_2$ (b5)

wherein $Q^{f1}$ is a $C_{3-10}$ fluoroalkylene group, or a $C_{3-10}$ fluoroalkylene group having at least one etheric oxygen atom between carbon atoms,
$Q^{f2}$ is a $C_{1-10}$ fluoroalkylene group, or a $C_{2-10}$ fluoroalkylene group having at least one etheric oxygen atom between carbon atoms,
$Q^{f3}$ is a $C_{2-10}$ fluoroalkylene group, or a $C_{2-10}$ fluoroalkylene group having at least one etheric oxygen atom between carbon atoms,
$Q^{f4}$ is a $C_{4-10}$ fluoroalkylene group, or a $C_{4-10}$ fluoroalkylene group having at least one etheric oxygen atom between carbon atoms,
$Q^{f5}$ is a $C_{4-10}$ fluoroalkylene group, or a $C_{3-10}$ fluoroalkylene group having at least one etheric oxygen atom between carbon atoms.

11. The curable fluorinated polymer according to any one of Claims 1 to 10, wherein the content of iodine atoms is from

0.1 to 20 μmol/g.

**12.** A process for producing a curable fluorinated polymer as defined in any one of Claims 1 to 11, which comprises the following steps (α) and (β):

(α) Step of subjecting a monomer component containing the fluoromonoenes (a) to radical co-polymerization in the presence of a chain transfer agent having iodine atoms to obtain an iodine-terminal polymer (X),
(β) Step of subjecting the fluorodiene (b) to radical polymerization in the presence of the iodine-terminal polymer (X) to introduce constituent units (B) based on the fluorodiene (b) to terminals of the iodine-terminal polymer (X).

**13.** The process for producing a curable fluorinated polymer according to Claim 12, wherein the chain transfer agent having iodine atoms is $|R^{f2}|$ (wherein $R^{f2}$ is a $C_{3-12}$ fluoroalkylene group).

**14.** The process for producing a curable fluorinated polymer according to Claim 12 or 13, wherein the monomer component contains the fluoromonoenes (a) and the fluorodiene (b).

**15.** A fluorinated polymer cured product obtained by curing a curable fluorinated polymer as defined in any one of Claims 1 to 11, in the presence of an organic peroxide.

**16.** A fluorinated polymer cured product obtained by curing a curable fluorinated polymer as defined in any one of Claims 1 to 11, in the presence of an organic peroxide and an acid acceptor.

**17.** The fluorinated polymer cured product according to Claim 15 or 16, which is a fluoroelastomer.

## INTERNATIONAL SEARCH REPORT

International application No.
PCT/JP2013/071921

A. CLASSIFICATION OF SUBJECT MATTER
*C08F214/18*(2006.01)i, *C08F293/00*(2006.01)i, *C08J3/24*(2006.01)i

According to International Patent Classification (IPC) or to both national classification and IPC

B. FIELDS SEARCHED

Minimum documentation searched (classification system followed by classification symbols)
C08F214/18, C08F293/00, C08J3/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2011/096370 A1 (Asahi Glass Co., Ltd.),<br>11 August 2011 (11.08.2011),<br>claims; paragraphs [0014] to [0039]; examples<br>& US 2012/0292661 A1 & EP 2532709 A1 | 1-10<br>11-17 |
| X | WO 2012/073977 A1 (Asahi Glass Co., Ltd.),<br>07 June 2012 (07.06.2012),<br>claims; paragraphs [0010] to [0033]; examples<br>(Family: none) | 1-17 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 September, 2013 (20.09.13) | 01 October, 2013 (01.10.13) |
| Name and mailing address of the ISA/<br>Japanese Patent Office<br><br>Facsimile No. | Authorized officer<br><br><br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3580889 A
- US 4394489 A
- US 4525539 A
- US 4035565 A
- US 4243770 A
- WO 90014367 A
- WO 2009096342 A
- JP 2012182281 A